(19) **Europäisches Patentamt**
**European Patent Office**
**Office européen des brevets**

(11) **EP 1 862 756 B1**

(12) **EUROPEAN PATENT SPECIFICATION**

(45) Date of publication and mention
of the grant of the patent:
**17.12.2008 Bulletin 2008/51**

(51) Int Cl.:
*F41G 7/30* *(2006.01)*

(21) Application number: **06114633.8**

(22) Date of filing: **29.05.2006**

(54) **Apparatus and method for estimating altitude**

Vorrichtung und Verfahren zur Schätzung der Höhe

Dispositif et procédé d'estimation d'altitude

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**05.12.2007 Bulletin 2007/49**

(73) Proprietor: **SAAB AB**
**581 88 Linköping (SE)**

(72) Inventor: **Tullsson, Bert-Eric**
**175 45 Järfälla (SE)**

(74) Representative: **Herbjörnsen, Rut et al**
**Albihns AB**
**P.O. Box 5581**
**114 85 Stockholm (SE)**

(56) References cited:
**US-A- 3 836 966**          **US-A- 4 315 609**

**Description**

Technical Field

The present invention relates to a device and a method for providing an altitude estimate as defined in the preambles of claim 1 and claim 8, respectively, and to a missile comprising such a device.

Background and Prior Art

Several military tactical missiles use a radar target seeker for terminal guidance. This category includes fairly large missiles such as anti-ship missiles, which often have a sensor and navigation system with considerable accuracy, matched to the long range of the missile, and including a radar altimeter permitting controlled flight at a very low altitude (down to less than 10 m above the waves).

US Patent No. 3,836,966 discloses a conventional radar altimeter wherein the altimeter antennas transmits a radar signal towards the ground, which is received again after a time delay that is indicative of the distance between the altimeter antennas and the terrain. A separate seeker radar is provided and a switch enables the connection of either the seeker radar or the altimeter radar to evaluation circuitry at any given time.

US Patent No. 4, 315,609 discloses a means use with a missile, for target location and for missile guidance based on the target location. The target location function is based on triangulation.

Smaller missiles that are launched from the ground, or from a flying platform, may have a much simpler sensor and navigation system, giving position and velocity estimates with significant errors. The missiles are generally roll-stabilized to fly with the right side up, but cost and space typically forbid a separate radar altimeter. For many types of navigation systems, therefore, the error in the vertical coordinate builds up more rapidly than the errors in the horizontal coordinates. It is very probable that the missile trajectory towards its target is a shallow dive, with diving angle less than 45°, since a shallow trajectory gives the best operating conditions for the radar seeker. During this dive, and immediately before it, an altitude estimation would give valuable information to the missile guidance system

Object of the Invention

It is an object of the invention to provide an altitude estimate in a military tactical missile, in particular in a missile that does not have an altimeter.

Summary of the Invention

This object is achieved according to the present invention by a device for providing an altitude estimate $a_{est}$ in a missile, said device comprising

- a radar seeker comprising a radar antenna for measuring a distance r to a point as a distance range comprising at least two range bins,
- a calculating unit for providing a component altitude estimate $a_{est}(s)$ for each of the at least two range bins as a function of r and θ, r being the distance to the respective range bin and θ being the elevation angle,
- said calculating unit also being arranged to provide the altitude estimate $a_{est}$ based on the at least two component altitude estimates $a_{est}(s)$.

The object is also achieved by a method of providing an altitude estimate $a_{est}$ in a missile, said device comprising

- measuring a distance r to a point as a distance range comprising at least two range bins by means of a radar seeker comprising a radar antenna,
- calculating a component altitude estimate $a_{est}(S)$ for each of the at least two range bins as a function of r and θ, r being the distance to the respective range bin and θ being the elevation angle,
- calculating the altitude estimate $a_{est}$ based on the at least two component altitude estimates $a_{est}(s)$.

Hence, the invention utilizes the radar beam to provide an estimate of the altitude.

Preferably, the calculating unit is arranged to calculate the at least two component altitude estimates $a_{est}(s)$ based on the equation $a_{est}(S) = r \cdot \sin\theta$ or the modified equation $a_{est}(S) = \Delta\theta \cdot r \cdot \cos(\theta) + a_0$

In one embodiment the calculating unit is arranged to calculate the altitude estimate $a_{est}$ by adapting the at least two component altitude estimates to a straight line and determining the slope k of the straight line.

In the latter case the calculating unit may be arranged to adapt the two component altitude estimates to a straight line using a recursive method utilizing the a priori knowledge of the altitude and improving it with at least one additional data point. Alternatively, the calculating unit may be arranged to adapt the two component altitude estimates to a straight line using a least-square fitting method.

The calculating unit may, for example, comprise a Kalman filter, preferably of polynomial tracking filter type, for adapting the at least two component altitude estimates to a straight line.

In a preferred embodiment the calculating unit is arranged to assign different weights to the component altitude estimates, dependent on elevation angle of each range bin. In this way, the component altitude estimates having the smallest error can be given a higher weight than those having a greater error.

The radar seeker may comprise means for creating an extra lobe below the main beam, said extra lobe illuminating the ground at shorter distances than the main beam does, the part illuminated by the extra lobe forming a part of the distance range. Since the error in the estimated altitude decreases significantly as the tangent of the angle θ increases the component altitude estimates from range bins created in this extra lobe will be more reliable than those of the main beam.

In a preferred embodiment the method comprises the following steps:

- for each of the at least two range bins:

    o computing the earth-related elevation angle
    o computing the horizontal range projection $x_i$
    o computing the vertical range projection $y_i$

    wherein the horizontal range projection and the vertical range projection, x,y, for each range bin together define a point
- fitting a straight line to the points $x_i,y_i$ according to the equation y=kx+m,
- taking m as the altitude estimate

The invention also relates to a military tactical missile characterized in that it comprises a device according to the above.

Brief Description of the Drawings

The invention will be described in more detail in the following, by way of example and with reference to the appended drawings in which:

    Figure 1 illustrates a missile 1 located at an altitude a above the ground.
    Figure 2 illustrates the vectors and angles referred to for a missile.
    Figure 3 illustrates altitude estimates as a function of measured elevation angles.
    Figure 4 illustrates the altitude estimates of Figure 3, corrected according to a preferred embodiment of the invention.

Detailed Description of Embodiments

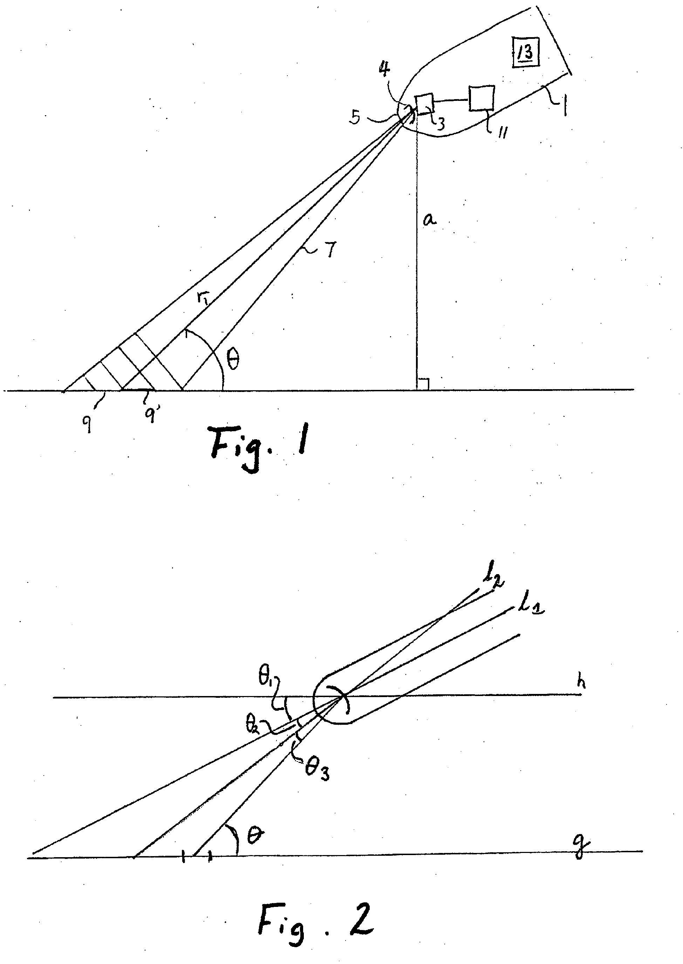

Figure 1 illustrates, in a vertical plane defined by the seeker azimuth axis and the vertical, a missile 1 located at an altitude a above the ground. The missile comprises a radar seeker 3 located in the nose of the missile 1. The radar seeker comprises a radar antenna 4 transmitting through an aperture 5 in the nose of the missile. The main beam 7 of the radar seeker 3 illuminates an area 9 on the ground. A calculation unit 11 is arranged to receive data from the radar seeker 3 and calculate the missile's altitude. The missile 1 typically also comprises a navigation system 13, which is arranged to provide an estimate of the missile's altitude.

It is supposed that the radar seeker 3 measures distances, that is, that it is not a dedicated Doppler radar. This measurement is probably discrete, and not continuous. Instead of giving an exact distance to a point on the ground, the seeker typically has range bins, for example 10 m wide. The distance will then be stated as a range. For example the value 960 may mean that the distance is greater than 955 m and smaller than 965 m. In the present application, the expressions "range bin" and "range gate" are used synonymously.

For guidance purposes the radar seeker also gives the azimuth angle and elevation angle to the target. These angles are measured relative to the seeker. In every instant, target angles are generally measured for every range bin where the signal-to-noise ratio is sufficiently high.

Thus, according to the invention the following assumptions are made:

- a missile in a shallow dive towards a target on the ground,
- the missile being equipped with a radar seeker with its main beam using a front aperture and measuring distances in discrete range bins and giving angle measurements for every range bin with a sufficiently high signal-to-noise ratio.

The main beam of the radar seeker 3 illuminates the ground, which for the purposes of illustration is taken to be flat. The discrete range resolution, that is, the range bins, cut up the illuminated part of the ground in strips orthogonal to the plane of the figure. In Figure 1 four strips are shown. One of these strips is marked 9' in Fig. 1. The strips may contain radar targets or other radar reflexes from the ground (ground clutter). For every range bin, that is, every discrete range value r, an elevation angle $\theta$, which is generally a function of the distance r, is measured.

As can be seen from Fig. 1, an estimate $a_{est}$ of the altitude a is, in a range bin in which the radar return is sufficiently strong, should be given by

$$a_{est} = r \cdot \sin(\theta) \qquad (1)$$

Also, every used range bin should give the same altitude estimate $a_{est}$. In reality, this is not always the case. In Fig. 1 the elevation angle $\theta$ is measured relative to the horizontal. In the flying missile, however, the angle is probably computed as a sum of a number of angles, which are known more or less exactly. This will be discussed with reference to Fig. 2.

In Fig. 2, a horizontal plane h is drawn parallel to the ground g through the centre of the seeker antenna. The line $1_1$ gives the direction of the missile body (fuselage). The main beam of the seeker is directed along the line $1_2$. One range bin illuminated by the main beam (not shown) is marked on the ground. Then the angle $\theta$ to the range bin is typically computed as

$$\theta = \theta_1 + \theta_2 + \theta_3$$

where the angles are defined as shown in Fig. 2 as

$\theta_1$ = the elevation angle of the missile fuselage (body)

$\theta_2$ = the relative elevation angle between the seeker and the missile fuselage

$\theta_3$ = the seeker elevation measurement for the range bin illustrated

The angles $\theta_1$ and $\theta_2$ are common to all range bins at a given instant of time. The relative angle $\theta_2$ may be very accurately known (measured). The angles $\theta_3$ (differing from range bin to range bin) are generally well known on the average, if the seeker is correctly calibrated, but may contain a stochastic component (an angular noise) differing from time to time and between different range bins.

The estimation or measurement of the elevation angle $\theta_1$ may contain a significant error, as will now be explained. This angle may be measured directly by a position gyro (vertical gyro) in the missile fuselage. Such a gyro, of a quality used in a relatively simple missile, probably has a significant bias. The angle $\theta_1$ may also be an output of missile navigation sensors. Some navigation systems, such as the Global Positioning System (GPS), may give the missile instantaneous position and the missile velocity components, but does not necessarily give an accurate estimate of the orientation angle $\theta_1$ of the missile fuselage.

The total effect of the above is that there is likely to be a significant bias $\Delta\theta$ (maybe several degrees of angle) in the estimate of the angle $\theta$. This bias is common for all range bins. Such a bias is fatal for the previously mentioned simple altitude estimation, since it will result in wrong estimates differing from range bin to range bin.

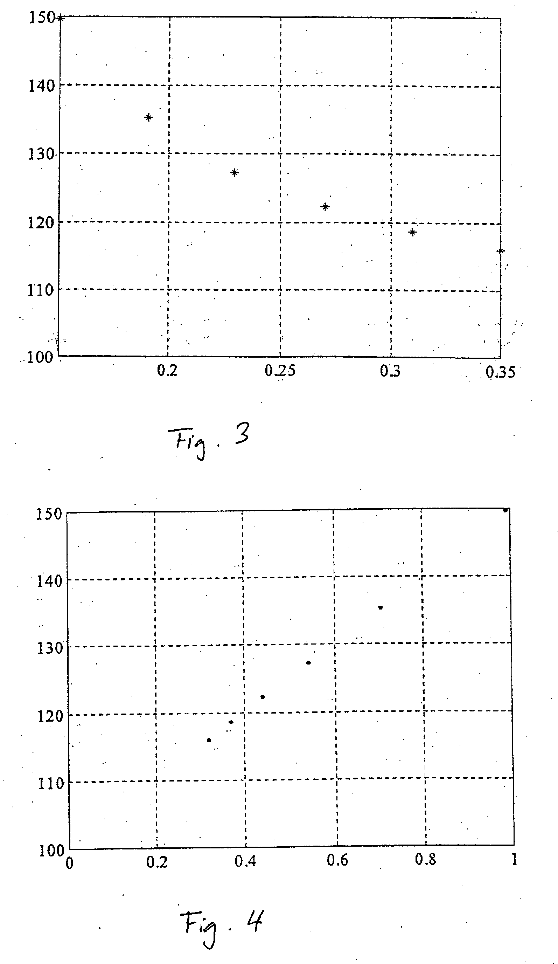

Figure 3 illustrates an estimate of the true altitude 100 m from 6 range bins with true elevation angles $\theta$ of 0.10, 0.14, 0.18, 0.22, 0.26 and 0.30 rad. Hence, the estimates cover an elevation beam of the size 0.2 rad, centered around an angle of 0.2 rad. There is an unknown elevation bias of 0.05 rad, moving the measured angles to the interval between 0.15 rad and 0.35 rad. As can be seen in Fig. 3, the altitude estimates differ between approximately 136 m and 117 m. Thus, none of the estimates is correct.

Suppose that the correct missile altitude is $a_0$ and that there is an unknown bias $\Delta\theta$ in the angle $\theta$ used in the altitude estimate $a_{est}$. Then

$$a_{est} = r \cdot \sin(\theta + \Delta\theta) = r \cdot \sin(\theta) \cdot \cos(\Delta\theta) + r \cdot \cos(\theta) \cdot \sin(\Delta\theta) \qquad (2)$$

Using small angles approximation, this yields:

$$a_{est} = r \cdot \sin(\theta) + \Delta\theta \cdot r \cdot \cos(\theta) = \qquad (3)$$

$$= r \cdot \sin(\theta) \cdot (1 + \Delta\theta / \tan(\theta)) = \qquad (4)$$

$$= \Delta\theta \cdot r \cdot \cos(\theta) + a_0 = \qquad (5)$$

$$= a_0 \cdot (1 + \Delta\theta / \tan(\theta)) \qquad (6)$$

According to a first embodiment of the invention the altitude estimate may be improved according to the following.

Equation 6 shows that the error in the estimated altitude decreases significantly as the tangent of the angle $\theta$ increases. For example, the error for $\theta = 0.3$ rad is roughly one third of the error for $\theta = 0.1$ rad. With a radar antenna elevation main beam of significant size, which is always the case, the height estimates in the lower part of the antenna beam are generally more accurate than the estimates in the upper part. A method of improving this further is to give the antenna an extra elevation lobe, extending the main beam downwards. Since the error in the estimated altitude decreases rapidly with the look-down angle, the extension produced by the extra lobe does not have to be very large. A resulting inertial look-down angle of 45° would increase the accuracy significantly. The extra lobe should be able to use the ordinary radar aperture in the nose of the missile.

The operation of the extra lobe differs significantly from that of an altimeter. An altimeter generally has a fairly wide beam directed downwards, using the strong reflectivity of the ground in this direction. The measurements of an altimeter are not based on equations involving angles.

With an antenna arrangement consisting of a feeder illuminating a reflector antenna which in turn reflects the radar radiation forwards, an extra lobe can often be created by an extra feeder horn.

The extra elevation lobe may also be created by means of an antenna which in elevation works as an array antenna, using different elevation channels, each with a wide beam in elevation, combining to a narrow main beam by means of beamforming. In this case, a redirection of the beam can be achieved, for example by introducing suitable phase shifts between the different elevation channels.

The extra elevation lobe does not have to be present all the time. It may be operated on a time multiplex basis, using a switch to the ordinary radar seeker receiver.

The values obtained for each range bin may be weighted in such a way that the range bins having the smallest look-down angle influence the result more than those having a greater look-down angle. Range bins having an elevation angle greater than a threshold value could be ignored. This method may be used in the case discussed above, where an extra lobe is generated, or on the main beam only.

According to a second embodiment of the invention, the calculation of $a_{est}$ is based on equation (5) above, that is,

$$a_{est} = \Delta\theta \cdot r \cdot \cos(\theta) + a_0 \qquad (5)$$

This equation may be compared to the general equation for a straight line, that is $y = kx + m$. Then it is obvious that if $r \cdot \cos(\theta)$ is chosen as a new independent variable, instead of the angle $\theta$, the correct altitude $a_0$ corresponds to the term m, (that is, the value of y for x=0) and the unknown bias $\Delta\theta$ corresponds to the slope k.

Figure 4 shows the data points of Fig. 3 plotted in this way, that is, the estimated altitude for each range bin as a function of $r \cdot \cos(\theta)/1000$.

From Fig. 4 it can be seen that there is a straight line between the altitude estimate points, going through the point (0,100) and thus indicating the correct altitude as 100 m. The slope is (50 m)/(1000 m) = 0.050 = $\Delta\theta$.

Hence, this second embodiment is based on fitting a straight line to a particular set of points computed from measured data. In the general case, there is noise both in the x and y coordinates in Fig. 4.

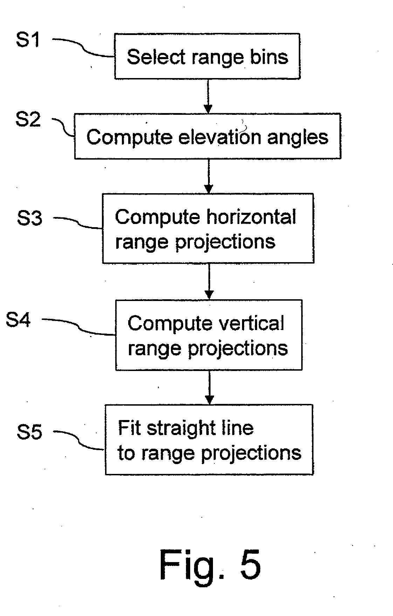

The method according to the second embodiment may be summarized as the following steps, illustrated in Fig. 5:

Step S1: Determine which range bins to consider. Typically this will be all range bins that are illuminated by the main beam of the radar seeker antenna, and where the signal is above a chosen threshold (generally, where the ratio of signal power to noise power is above a chosen threshold). Suppose there are N such bins, with ranges $r_1$,..., $r_N$ in increasing order.

Step S2: Compute the earth-related elevation angles (look-down angles) $\theta_i$, for the range bins $r_i$ that were selected in Step S1. If ranges are in increasing order, these angles should be decreasing.

Step S3: Compute the N horizontal range projections $x_1$, ..., $x_N$ according to the formula $x_i = r_i \cdot \cos(\theta_i)$.

Step S4: Compute the N vertical range projections (coarse altitude estimates) $y_1$, ..., $y_N$ according to the formula $y_i = r_i \cdot \sin(\theta_i)$.

Step S5: Fit a straight line $y = k \cdot x + m$ to the N points $(x_1,y_1)$, ... $(x_N,y_N)$.

The number m determined in step S5 is the final, improved, altitude estimate.

To fit a straight line $y = k \cdot x + m$ to the data points $(x_i,y_i)$, i = 1,...,N, according to a preferred embodiment least square methods are used. If all the data points are treated alike (unweighted least squares) it is known from standard literature that the unknown values k,m can be determined from the pair of equations

$$N \cdot m \ + \ S_x \cdot k \ = \ S_y$$

$$S_x \cdot m \ + \ S_{xx} \cdot k \ = \ S_{xy}$$

where the constants $S_x$, $S_y$, $S_{xx}$, $S_{xy}$ are defined as $\Sigma\, x_i$, $\Sigma\, y_i$, $\Sigma\, x_i^2$, $\Sigma\, x_i \cdot y_i$ respectively (where the summation index i goes from 1 to N) and can be computed by devices performing summations and multiplications. Solution gives for the number m

$$m = (S_{xx} \cdot S_y - S_x \cdot S_{xy}) / (N \cdot S_{xx} - S_x^2)$$

However, it may be particularly advantageous to give prominence to points with larger absolute values of $\theta$ (weighted least-square fitting). The skilled person is familiar with the use of least square methods for such purposes.

Another advantageous method of implementing the data is to perform a recursive height estimate, utilizing the a priori knowledge of the altitude from the earlier estimates and improving it with each data point added. It is well known that a recursive weighted least-squares estimator has the same structure as a Kalman filter and is in fact a special case of the Kalman filter. It may thus be advantageous to implement the straight line fit as a Kalman filter, preferably of the polynomial tracking filter type, described in Gelb (ed.), Applied Optimal Estimation, ISBN 0-262-70008-5, The M.I.T. press, 1974.

From a numerical point of view it may be advantageous to scale the data before doing the straight line fit.

## Claims

1. A device for providing an altitude estimate $a_{est}$ in a missile, comprising a radar antenna (4) and a calculating unit (9) for providing the altitude estimate based on information from the radar antenna, said device being **characterized in that** it comprises:

- a radar seeker (3) comprising the radar antenna (4), said radar seeker being arranged to measure a distance r to a point as a distance range comprising at least two range bins (9), **in that**
- the calculating unit (11) is arranged to provide a component altitude estimate $a_{est}(s)$ for each of the at least two range bins as a function of r and $\theta$, r being the distance to the respective range bin (9) and $\theta$ being the elevation angle, and **in that**
- the calculating unit is further arranged to provide the altitude estimate $a_{est}$ based on the at least two component altitude estimates $a_{est}(s)$.

2. A device according to claim 1, wherein the calculating unit (11) is arranged to calculate the at least two component altitude estimates $a_{est}(s)$ based on the equation $a_{est}(s) = r \cdot \sin\theta$.

3. A device according to claim 1, wherein the calculating unit (11) is arranged to calculate the at least two component altitude estimates $a_{est}(s)$ based on the modified equation $a_{est}(s) = \Delta\theta \cdot r \cdot \cos(\theta) + a_0$

4. A device according to claim 1, 2 or 3, wherein the calculating unit (11) is arranged to calculate the altitude estimate $a_{est}$ by adapting the at least two component altitude estimates to a straight line and determining the slope k of the straight line.

5. A device according to claim 4, wherein the calculating unit (11) is arranged to adapt the two component altitude estimates to a straight line using a recursive method utilizing the a priori knowledge of the altitude and improving it with at least one additional data point.

6. A device according to claim 4, wherein the calculating unit (11) is arranged to adapt the two component altitude estimates to a straight line using a least-square fitting method.

7. A device according to any one of claim 2-5, wherein the calculating unit (11) comprises a Kalman filter, preferably of polynomial tracking filter type, for adapting the at least two component altitude estimates to a straight line.

8. A device according to any one of the preceding claims, wherein the calculating unit (11) is arranged to assign different weights to the component altitude estimates, dependent on elevation angle of each range bin.

9. A device according to claim 1 or 8, wherein the radar seeker comprises means for creating an extra lobe below the main beam, said extra lobe illuminating the ground at shorter distances than the main beam does, the part illuminated by the extra lobe forming a part of the distance range.

10. A method of providing an altitude estimate $a_{est}$ in a missile, said method being **characterized in that** it comprises

- measuring a distance r to a point as a distance range comprising at least two range bins by means of a radar seeker (3) comprising a radar antenna (4),
- calculating a component altitude estimate $a_{est}(s)$ for each of the at least two range bins, as a function of r and $\theta$, r being the distance to the respective range bin and $\theta$ being the elevation angle,
- calculating the altitude estimate $a_{est}$ based on the at least two component altitude estimates $a_{est}(s)$.

11. A method according to claim 10, wherein the at least two component altitude estimates $a_{est}(s)$ are calculated based on the equation $a_{est}(s) = r \cdot \sin\theta$.

12. A method according to claim 10, wherein the at least two component altitude estimates $a_{est}(s)$ are calculated based on the modified equation $a_{est}(s) = \Delta\theta \cdot r \cdot \cos(\theta) + a_0$

13. A method according to claim 10, 11 or 12, wherein the altitude estimate $a_{est}$ is calculated by adapting the at least two component altitude estimates to a straight line and determining the slope k of the straight line.

14. A method according to claim 13, comprising the following steps:

- for each of the at least two range bins:

o computing the earth-related elevation angle
o computing the horizontal range projection $x_i$

o computing the vertical range projection $y_i$

wherein the horizontal range projection and the vertical range projection, x,y, for each range bin together define a point
- fitting a straight line to the points $x_i,y_i$ according to the equation y=kx+m,
- taking m as the altitude estimate

**15.** A method according to claim 13 or 14, wherein the two component altitude estimates are adapted to a straight line using a recursive method utilizing the a priori knowledge of the altitude and improving it with at least one additional data point.

**16.** A method according to claim 13 or 14, comprising the step of adapting the two component altitude estimates to a straight line using a least-square fitting method.

**17.** A method according to any one of the claims 10-16, wherein the at least two component altitude estimates are adapted to a straight line by means of a Kalman filter, preferably of polynomial tracking filter type.

**18.** A method according to any one of the claims 10-17, wherein different weights are assigned to the component altitude estimates, dependent on elevation angle of each range bin.

**19.** A method according to any one of the claims 10-18, comprising the step of creating an extra lobe below the main beam, said extra lobe illuminating the ground at shorter distances than the main beam does, the part illuminated by the extra lobe forming a part of the distance range

**20.** A military tactical missile **characterized in that** it comprises a device according to any one of the claims 1-8.

**Patentansprüche**

**1.** Vorrichtung zum Bereitstellen einer Höhenbeurteilung $a_{est}$ in einer Rakete, umfassend eine Radarantenne (4) und eine Recheneinheit (9) zum Bereitstellen der Höhenbeurteilung basierend auf einer Information von der Radarantenne, wobei die Vorrichtung **dadurch gekennzeichnet ist, dass** sie umfasst:

- einen Radarsucher (3), der die Radarantenne (4) umfasst, wobei der Radarsucher eingerichtet ist, einen Abstand r zu einem Punkt als einen zumindest zwei Bereichsfächer (9) umfassenden Abstandsbereich zu erfassen, dadurch, dass
- die Recheneinheit (11) eingerichtet ist, eine Komponentenhöhenbeurteilung $a_{est}(s)$ für jede der zumindest zwei Bereichsfächer als eine Funktion von r und θ bereitzustellen, wobei r der Abstand des entsprechenden Bereichsfächers (9) und θ der Steigungswinkel ist, und dadurch, dass
- die Recheneinheit weiter eingerichtet ist, die Höhenbeurteilung $a_{est}$ basierend auf den zumindest zwei Komponentenhöhenbeurteilungen $a_{est}(s)$ bereitzustellen.

**2.** Vorrichtung gemäß Anspruch 1, bei der die Recheneinheit (11) eingerichtet ist, die zumindest zwei Komponentenhöhenbeurteilungen $a_{est}(s)$ basierend auf der Gleichung $a_{est}(s) = r \cdot \sin\theta$ zu errechnen.

**3.** Vorrichtung gemäß Anspruch 1, bei der die Recheneinheit (11) eingerichtet ist, die zumindest zwei Komponentenhöhenbeurteilungen $a_{est}(s)$ basierend auf der modifizierten Gleichung $a_{est}(s) = \Delta\theta \cdot r \cdot \cos\theta + a_0$ zu errechnen.

**4.** Vorrichtung gemäß einem der Ansprüche 1, 2 oder 3, bei der die Recheneinheit (11) eingerichtet ist, die Höhenbeurteilung $a_{est}$ durch Annähern der zumindest zwei Komponentenhöhenbeurteilungen $a_{est}(s)$ an eine gerade Linie und Bestimmen der Steigung k der geraden Linie zu errechnen.

**5.** Vorrichtung gemäß Anspruch 4, bei der die Recheneinheit (11) eingerichtet ist, die zwei Komponentenhöhenbeurteilungen unter Verwendung eines das Vorwissen der Höhe verwendenden Rekursionsverfahrens an eine gerade Linie anzunähern, und sie mit zumindest einem zusätzlichen Datenpunkt zu verbessern.

**6.** Vorrichtung gemäß Anspruch 4, bei der die Recheneinheit (11) eingerichtet ist, die zwei Komponentenhöhenbeurteilungen unter Verwendung eines Verfahrens der kleinsten Quadrate an eine gerade Linie anzunähern.

**7.** Vorrichtung gemäß einem der Ansprüche 2-5, bei der die Recheneinheit (11) einen Kalman-Filter umfasst, bevorzugt der Art eines Polynomverfolgungsfilters, um die zumindest zwei Komponentenhöhenbeurteilungen $a_{est}(s)$ an eine gerade Linie anzunähern.

**8.** Vorrichtung gemäß einem der vorangegangenen Ansprüche, bei der die Recheneinheit (11) eingerichtet ist, unterschiedliche Gewichtungen auf die Komponentenhöhenbeurteilungen abhängig von einem Steigungswinkel jedes Bereichsfachs zu vergeben.

**9.** Vorrichtung gemäß einem der Ansprüche 1 oder 8, bei welcher der Radarsucher Mittel umfasst, um eine Extrakeule unterhalb des Hauptstrahls zu erzeugen, wobei die Extrakeule den Boden an kürzeren Abständen als der Hauptstrahl aufklärt, wobei der durch die Extrakeule aufgeklärte Abschnitt einen Abschnitt des Abstandsbereichs ausbildet.

**10.** Verfahren zum Bereitstellen einer Höhenbeurteilung $a_{est}$ in einer Rakete, wobei das Verfahren **dadurch gekennzeichnet ist, dass** es umfasst:

- Erfassen eines Abstands r zu einem Punkt als ein zumindest zwei Bereichsfächer umfassenden Abstandsbereichs mit Hilfe eines eine Radarantenne (4) umfassenden Radarsuchers (3),
- Errechnen einer Komponentenhöhenbeurteilung $a_{est}(s)$ für jede der zumindest zwei Bereichsfächer als eine Funktion von r und θ, wobei r der Abstand zum entsprechenden Bereichsfach (9) und θ der Steigungswinkel ist,
- Errechnen der Höhenbeurteilung $a_{est}$ basierend auf den zumindest zwei Komponentenhöhenbeurteilungen $a_{est}(s)$.

**11.** Verfahren gemäß Anspruch 10, bei dem die zumindest zwei Komponentenhöhenbeurteilungen $a_{est}(s)$ basierend auf der Gleichung $a_{est}(s) = r \cdot \sin\theta$ errechnet werden.

**12.** Verfahren gemäß Anspruch 10, bei dem die zumindest zwei Komponentenhöhenbeurteilungen $a_{est}(s)$ basierend auf der modifizierten Gleichung $a_{est}(s) = \Delta\theta \cdot r \cdot \cos\theta + a_0$ errechnet werden.

**13.** Verfahren gemäß einem der Ansprüche 10, 11 oder 12, bei dem die Höhenbeurteilung $a_{est}$ durch Annähern der zumindest zwei Komponentenhöhenbeurteilungen $a_{est}(s)$ an eine gerade Linie und Bestimmen der Steigung k der geraden Linie errechnet wird.

**14.** Verfahren gemäß Anspruch 13, das die folgenden Schritte umfasst:

- für jede der zumindest zwei Bereichsfächer:

  o Kalkulieren des erdbezogenen Steigungswinkels
  o Kalkulieren der horizontalen Bereichsprojektion $x_i$
  o Kalkulieren der vertikalen Bereichsprojektion $y_i$

wobei die horizontale Bereichsprojektion und die vertikale Bereichsprojektion, x, y, für jedes Bereichsfach zusammen einen Punkt definiert

- Anpassen einer geraden Linie an die Punkte $x_i, y_i$ gemäß der Gleichung $y = kx + m$
- Entnehmen von m als die Höhenbeurteilung

**15.** Verfahren gemäß einem der Ansprüche 13 oder 14, bei dem die zwei Komponentenhöhenbeurteilungen unter Verwendung eines das Vorwissen der Höhe verwendenden Rekursionsverfahrens an eine gerade Linie angenährt, und sie mit zumindest einem zusätzlichen Datenpunkt verbessert werden.

**16.** Verfahren gemäß einem der Ansprüche 13 oder 14, welches den Schritt des Annäherns der zwei Komponentenhöhenbeurteilungen an eine gerade Linie unter Verwendung eines Verfahrens der kleinsten Quadrate umfasst.

**17.** Verfahren gemäß einem der Ansprüche 10-16, bei dem die zumindest zwei Komponentenhöhenbeurteilungen mit Hilfe eines Kalmanfilters, bevorzugt der Art eines Polynomverfolgungsfilters, an eine gerade Linie angenähert werden.

**18.** Verfahren gemäß einem der Ansprüche 10-17, bei dem unterschiedliche Gewichtungen auf die Komponentenhöhenbeurteilungen abhängig von einem Steigungswinkel jedes Bereichsfachs vergeben werden.

**19.** Verfahren gemäß einem der Ansprüche 10-18, das den Schritt des Erzeugens einer Extrakeule unterhalb dem Hauptstrahl umfasst, wobei die Extrakeule den Boden in kürzeren Abständen als der Hauptstrahl aufklärt, wobei der durch die Extrakeule aufgeklärte Abschnitt einen Abschnitt des Abstandsbereichs ausbildet.

**20.** Militärisch-taktische Rakete, **dadurch gekennzeichnet, dass** sie eine Vorrichtung gemäß einem der Ansprüche 1-8 umfasst.

## Revendications

**1.** Dispositif pour fournir une estimation d'altitude $a_{est}$ dans un missile, comprenant une antenne de radar (4) et une unité de calcul (9) pour fournir l'estimation d'altitude sur la base d'informations provenant de l'antenne de radar, ledit dispositif étant **caractérisé en ce qu'**il comprend :

   ■ un dispositif de recherche de radar (3) comprenant l'antenne de radar (4), ledit dispositif de recherche de radar étant agencé pour mesurer une distance r jusqu'à un point en tant que plage de distance comprenant au moins deux créneaux de distance (9), **en ce que**
   ■ l'unité de calcul (11) est agencée pour fournir une estimation d'altitude constitutive $a_{est}(s)$ pour chacun desdits au moins deux créneaux de distance en fonction de r et de θ, r étant la distance jusqu'au créneau de distance (9) respectif et θ étant l'angle d'élévation, et **en ce que**
   ■ l'unité de calcul est en outre agencée pour fournir l'estimation d'altitude $a_{est}$ sur la base desdites au moins deux estimations d'altitude constitutives $a_{est}(s)$.

**2.** Dispositif selon la revendication 1, dans lequel l'unité de calcul (11) est agencée pour calculer lesdites au moins deux estimations d'altitude constitutives $a_{est}(s)$ sur la base de l'équation $a_{est}(s) = r \cdot \sin\theta$.

**3.** Dispositif selon la revendication 1, dans lequel l'unité de calcul (11) est agencée pour calculer lesdites au moins deux estimations d'altitude constitutives $a_{est}(s)$ sur la base de l'équation modifiée $a_{est}(s) = \Delta\theta \cdot r \cdot \cos(\theta) + a_0$.

**4.** Dispositif selon la revendication 1, 2 ou 3, dans lequel l'unité de calcul (11) est agencée pour calculer l'estimation d'altitude $a_{est}$ en ajustant lesdites au moins deux estimations d'altitude constitutives à une droite et en déterminant la pente k de la droite.

**5.** Dispositif selon la revendication 4, dans lequel l'unité de calcul (11) est agencée pour ajuster les deux estimations d'altitude constitutives à une droite en utilisant un procédé récursif utilisant la connaissance à priori de l'altitude et en l'améliorant avec au moins un point de données supplémentaire.

**6.** Dispositif selon la revendication 4, dans lequel l'unité de calcul (11) est agencée pour ajuster les deux estimations d'altitude constitutives à une droite en utilisant un procédé d'ajustement des moindres carrés.

**7.** Dispositif selon l'une quelconque des revendications 2 à 5, dans lequel l'unité de calcul (11) comprend un filtre de Kalman, de préférence un type de filtre polynomial de poursuite, pour ajuster lesdites au moins deux estimations d'altitude constitutives à une droite.

**8.** Dispositif selon l'une quelconque des revendications précédentes, dans lequel l'unité de calcul (11) est agencée pour attribuer différents coefficients de pondération aux estimations d'altitude constitutives, en fonction d'un angle d'élévation de chaque créneau de distance.

**9.** Dispositif selon la revendication 1 ou 8, dans lequel le dispositif de recherche de radar comprend des moyens pour créer un lobe supplémentaire au-dessous du faisceau principal, ledit lobe supplémentaire éclairant le sol à des distances plus courtes que ne le fait le faisceau principal, la partie éclairée par le lobe supplémentaire formant une partie de la plage de distance.

**10.** Procédé de fourniture d'une estimation d'altitude $a_{est}$ dans un missile, ledit procédé étant **caractérisé en ce qu'**il comprend les étapes consistant à :

■ mesurer une distance r jusqu'à un point en tant que plage de distance comprenant au moins deux créneaux de distance au moyen d'un dispositif de recherche de radar (3) comprenant une antenne de radar (4),
■ calculer une estimation d'altitude constitutive $a_{est}(s)$ pour chacun desdits au moins deux créneaux de distance, en fonction de r et de θ, r étant la distance jusqu'au créneau de distance respectif et θ étant l'angle d'élévation,
■ calculer l'estimation d'altitude $a_{est}$ sur la base desdites au moins deux estimations d'altitude constitutives $a_{est}(s)$.

**11.** Procédé selon la revendication 10, dans lequel lesdites au moins deux estimations d'altitude constitutives $a_{est}(s)$ sont calculées sur la base de l'équation $a_{est}(s) = r \cdot \sin\theta$.

**12.** Procédé selon la revendication 10, dans lequel lesdites au moins deux estimations d'altitude constitutives $a_{est}(s)$ sont calculées sur la base de l'équation modifiée $a_{est}(s) = \Delta\theta.r.\cos(\theta) + a0$.

**13.** Procédé selon la revendication 10, 11 ou 12, dans lequel l'estimation d'altitude $a_{est}$ est calculée en ajustant lesdites au moins deux estimations d'altitude constitutives à une droite et en déterminant la pente k de la droite.

**14.** Procédé selon la revendication 13, comprenant les étapes suivantes :

■ pour chacun desdits au moins deux créneaux de distance :

o calculer l'angle d'élévation associé à la terre o calculer la projection de plage horizontale $x_i$
o calculer la projection de plage verticale $y_i$

dans lequel la projection de plage horizontale et la projection de plage verticale, x, y, pour chaque créneau de distance définissent ensemble un point
■ ajuster une droite aux points $x_i$, $y_i$ conformément à l'équation $y = kx + m$,
■ prendre m en tant qu'estimation d'altitude.

**15.** Procédé selon la revendication 13 ou 14, dans lequel les deux estimations d'altitude constitutives sont ajustées à une droite en utilisant un procédé récursif utilisant la connaissance à priori de l'altitude et en l'améliorant avec au moins un point de données supplémentaire.

**16.** Procédé selon la revendication 13 ou 14, comprenant l'étape consistant à ajuster les deux estimations d'altitude constitutives à une droite en utilisant un procédé d'ajustement des moindres carrés.

**17.** Procédé selon l'une quelconque des revendications 10 à 16, dans lequel lesdites au moins deux estimations d'altitude constitutives sont ajustées à une droite au moyen d'un filtre de Kalman, de préférence un type de filtre polynomial de poursuite.

**18.** Procédé selon l'une quelconque des revendications 10 à 17, dans lequel différents coefficients de pondération sont attribués aux estimations d'altitude constitutives, en fonction de l'angle d'élévation de chaque créneau de distance.

**19.** Procédé selon l'une quelconque des revendications 10 à 18, comprenant l'étape consistant à créer un lobe supplémentaire au-dessous du faisceau principal, ledit lobe supplémentaire éclairant le sol à des distances plus courtes que ne le fait le faisceau principal, la partie éclairée par le lobe supplémentaire formant une partie de la plage de distance.

**20.** Missile tactique militaire **caractérisé en ce qu'**il comprend un dispositif selon l'une quelconque des revendications 1 à 8.

**Fig. 1**

**Fig. 2**

Fig. 3

Fig. 4

S1 — Select range bins

↓

S2 — Compute elevation angles

↓

S3 — Compute horizontal range projections

↓

S4 — Compute vertical range projections

↓

S5 — Fit straight line to range projections

# Fig. 5

## REFERENCES CITED IN THE DESCRIPTION

**Patent documents cited in the description**

- US 3836966 A

- US 4315609 A

**Non-patent literature cited in the description**

- Applied Optimal Estimation. M.I.T. press, 1974